# EUROPÄISCHE PATENTSCHRIFT

(11) **EP 0 419 754 B1**
(45) Veröffentlichungstag und Bekanntmachung des Hinweises auf die Patenterteilung: **18.05.1994**
(21) Anmeldenummer: 89890248.1
(22) Anmeldetag: 25.09.1989
(51) Int. Cl.: B26D 7/26, G05B 19/18

(54) **Schneidmaschine zum Schneiden von Flachmaterial**
Apparatus for cutting a flat material
Dispositif pour couper des matériaux plats

(43) Veröffentlichungstag der Anmeldung: 03.04.1991
(73) Patentinhaber: GFM Gesellschaft für Fertigungstechnik und Maschinenbau Gesellschaft m.b.H., A-4403 Steyr (AT)
(72) Erfinder: Blaimschein, Gottfried, Dipl.-Ing., A-4407 Steyr (AT); Dietachmayr, Harald, A-4452 Ternberg (AT)
(74) Vertreter: Hübscher, Heiner, Dipl.-Ing.

(56) Entgegenhaltungen:
- DE-A- 3 426 548
- FR-A- 2 580 534
- GB-A- 1 189 204

## Beschreibung

Die Erfindung bezieht sich auf eine Schneidmaschine zum Schneiden von Flachmaterial, mit einem eine Arbeitsfläche bildenden Schneidtisch, einem über die Arbeitsfläche verfahrbaren Support und einem auf dem Support aufgebauten, ein Schneidmesser aufweisenden Schneidaggregat, das zur Höheneinstellung des Messers auf eine bestimmte Schnittiefe auf einem Vertikalschlitten des Supports sitzt und zum schnittgerechten Ausrichten des Schneidmessers mit einem um eine Vertikalachse drehbaren Messerhalter ausgestattet ist, wobei die Antriebe von Messerhalter, Vertikalschlitten und Support über eine Steuerungseinrichtung entsprechend einem eingebbaren Schnittprogramm ansteuerbar sind.

Solche Schneidmaschinen erlauben das Schneiden mit exakt kontrollierbarer Schnittiefe, um beispielsweise bei einem mehrschichtigen Ausgangsmaterial nur eine bestimmte Anzahl der Schichten durchtrennen und eine oder mehrere Schichten ungeschnitten lassen zu können, was beim Ausschneiden von Zuschnitten aus bandförmig vorliegendem Prepregmaterial von besonderer Bedeutung ist, da hier nur die Prepregschicht, nicht aber die Trägerfolie dieser Schicht durchschnitten werden soll. Zu diesem Schneiden auf Tiefe haben sich bereits sogenannte Ultraschallmesser bestens bewährt, wobei unter Ultraschallmeser ein mit Ultraschallfrequenz schwingendes Schneidmesser verstanden wird. Um die Schnitttiefe exakt einstellen zu können, ist es erforderlich, die relative Höhenlage der Messerspitze zur Arbeitsfläche festzustellen und einen Referenzpunkt für die gewünschte Höheneinstellung bestimmen zu können. Bisher wird dazu das Messer durch Absenken des Vertikalschlittens vorsichtig an die Arbeitsfläche herangefahren, bis die Messerspitze einen auf die Arbeitsfläche aufgelegten Meßstreifen berührt, was allerdings recht langwierig und umständlich ist und außerdem nicht die gewünschte Genauigkeit der Justierung gewährleistet. Da die Schneidmesser nach jedem Messerwechsel, aber auch während des Einsatzes zu einer Verschleißkorrektur immer wieder neu justiert werden müssen, behindert und verzögert dieser zeitintensive Richtvorgang den gesamten Schneidablauf beträchtlich.

Außerdem ist es wegen der tangentialen Führung der Schneidmesser beim Schnitt entlang der Schnittlinie zusätzlich notwendig, die Winkellage des Messers festzulegen und der Steuerungseinrichtung einen entsprechenden Referenzpunkt für die Winkeleinstellung einzugeben. Auch dieses Bestimmen der Winkellage wird bisher händisch durch ein Verdrehen des Messers bis in eine Justierposition durchgeführt und verlangsamt den Justiervorgang ebenfalls.

Nach der DE-A-34 26 548 wurde zwar bereits bei einer CNC-gesteuerten Werkzeugmaschine mit einer längs dreier Koordinatenachsen zustellbaren Maschinenspindel, an der ein Umlaufwerkzeug ansetzbar ist, zur Ermittlung des Flugkreisdurchmessers der Schneide des eingespannten Werkzeuges und auch zur Ermittlung der längs der Spindelachse gemessenen Werkzeuglänge eine Meßeinheit vorgeschlagen, die über zwei zueinander senkrecht wirkende Längenmeßglieder horizontale und vertikale Meßpositionen des Werkzeuges zu bestimmen erlaubt, doch eignet sich diese Meßeinrichtung nicht zum Justieren des auf eine bestimmte Schnittiefe einstellbaren Schneidmessers einer gattungsgemäßen Schneidmaschine, weil einerseits eine Werkzeuglänge und nicht der Werkzeugabstand von der Arbeitsfläche und anderseits ein Schneidkreisdurchmesser und nicht die Winkellage eines Schneidmessers erfaßbar sind.

Der Erfindung liegt daher die Aufgabe zugrunde, diese Mängel zu beseitigen und eine Schneidmaschine der eingangs geschilderten Art zu schaffen, die sich durch eine besonders rationelle Justiermöglichkeit ihres Schneidmessers auszeichnet.

Die Erfindung löst diese Aufgabe dadurch, daß eine Justiereinrichtung für das Schneidmesser einer eingangsgenannten Schneidmaschine mit einem vertikal ausgerichteten Weggeber vorgesehen ist, der die Istlage des mit seiner Spitze auf einem Meßkopf des Weggebers aufgesetzten Schneidmessers bei in eine Justierposition gebrachtem Vertikalschlitten erfaßt und die Abweichung dieser Istlage von einer in ihrer Höhenlage gegenüber der Arbeitsfläche vorjustierten Nullage des Meßkopfes zur Bestimmung eines Referenzpunktes für die Höheneinstellung des Schneidmessers der Steuerungseinrichtung eingibt, wobei der Weggeber vorzugsweise am Support angeordnet ist, und daß die Justiereinrichtung zusätzlich einen horizontal ausgerichteten zweiten Weggeber aufweist, der die während einer Umdrehung des Schneidmessers bei in eine Justierposition gebrachtem Schneidaggregat auftretenden Istlagenänderungen erfaßt und zur Bestimmung der Winkellage des Schneidmessers und zur Festsetzung eines Referenzpunktes für dessen Winkeleinstellung der Steuerungseinrichtung eingibt.

Zum Justieren der Höhenlage des Schneidmessers bzw. der Steuerung braucht hier das Schneidaggregat nur zu der an geeigneter Stelle der Schneidmaschine, z. B. bei längeren Schneidtischen wegen der kurzen Anfahrwege direkt am Support angeordneten Justiereinrichtung verfahren und der Vertikalschlitten in die Justierposition im Meßbereich des Weggebers abgesenkt zu werden, in der die Spitze des Schneidmessers auf den Meßkopf des Weggebers drückt, und der Weggeber, der die Wegdifferenz von der vorjustierten Meßkopf-Nullage zur jeweiligen Istlage des Schneidmessers mißt und dadurch der Steuerungseinrichtung ein Maß für eine genaue Höhenmessung der Messerspitze eingibt, liefert für die Steuerungseinrichtung den gewüschten Referenzpunkt, so daß nun die Messerspitze über die Steuerungseinrichtung relativ zu diesem Referenzpunkt exakt in die gewünschte Position oberhalb der Arbeitsfläche gebracht werden kann. Dieses schnelle und einfache Setzen des Referenzpunktes ermöglicht auch die Justierung des Schneidmessers nicht nur nach jedem Messerwechsel, sondern praktisch zu jedem beliebigen Zeitpunkt auch während der Messerstandzeit, so daß durch den Vergleich der jeweiligen der Steuerungseinrichtung eingegebenen Meßdaten ein Verschleiß der Messerspitze festgestellt und über die Steuerungseinrichtung dann auch korrigiert werden kann. Diese Verschleißkorrektur ist besonders beim Durchtrennen von faserverstärkten Materialien, wie Prepregs, wichtig, da beim Schneiden dieses Materials sichergestellt sein muß, daß auch jede einzelne Faser durchtrennt wird, um ein automatisches Abnehmen u. dgl. der geschnittenen Teile zu garantieren. Andernfalls käme es zu einem erhöhten Ausschuß, zu größeren Stillstandszeiten und zu Minderungen der Maschinenauslastung und Materialnutzung.

Um auch ein Ausrichten der Winkellage des Schneidmessers automatisieren zu können, gibt es den horizontal ausgerichteten Weggeber, der die während einer Messerumdrehung auftretenden Breitenänderungen des Schneidmessers erfaßt, die ja von dessen Querschnittsform abhängen und Informationen zur Erkennung der Messerform und der Winkellage des Schneidmessers mit sich bringen, so daß die der Steuerungseinrichtung eingegebenen Meßwerte des selbstverständlich justierten horizontalen Weggebers auf einfache Weise das Festsetzen eines Referenzpunktes für die Winkeleinstellung des Schneidmessers erlauben, womit dann das Schneidmesser über die Steuerungseinrichtung in Abhängigkeit von einem solchen Referenzpunkt exakt um entsprechende Winkelbeträge verdreht werden kann.

Vorteilhafterweise sind beide Weggeber in einem gemeinsamen Gehäuse der Justiereinrichtung angeordnet, wobei der horizontal ausgerichtete Weggeber im Höhenbereich der Nullage des Meßkopfes des vertikal ausgerichteten Weggebers liegt, so daß es nicht nur zu einer raumsparenden Bauweise kommt, sondern die nebeneinanderliegenden Meßbereiche der Weggeber auch praktisch bei gleichbleibender Schneidaggregatstellung in einer Justierposition eine Höhen- und eine Winkellagejustierung des Schneidmessers erlauben.

An und für sich lassen sich beliebige Weggeber, die mit erforderlicher Meßgenauigkeit arbeiten, in der Justiereinrichtung einsetzen, wobei für den horizontalen Weggeber auch berührungsfrei messende Geber, wie optische Geber, möglich sind, doch eignen sich wegen ihrer Einfachheit und Robustheit besonders mechanisch-elektrische Weggeber, vorzugsweise induktive Weggeber, die einen Meßkopf zum Aufsetzen bzw. zum seitlichen Andrücken des Schneidmessers aufweisen und die Istlagen des Meßkopfes und dessen Abweichungen von einer justierten Ausgangslage der Steuerungseinrichtung eingeben, da sie wenig Platz beanspruchen, leicht justierbar sind und stets die gewünschte Meßpräzision gewährleisten.

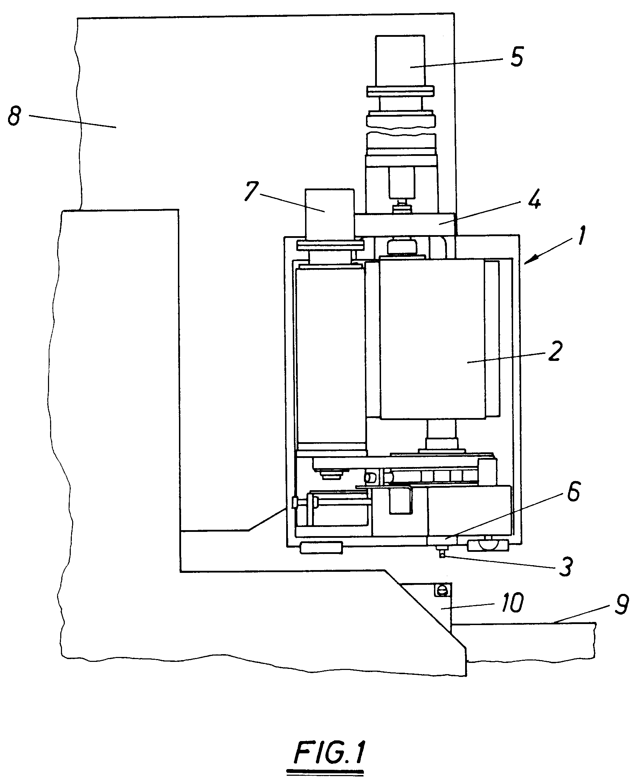

In der Zeichnung ist der Erfindungsgegenstand rein schematisch veranschaulicht, und zwar zeigen
- Fig. 1: einen Teil einer erfindungsgemäßen Schneidmaschine in Seitenansicht und die

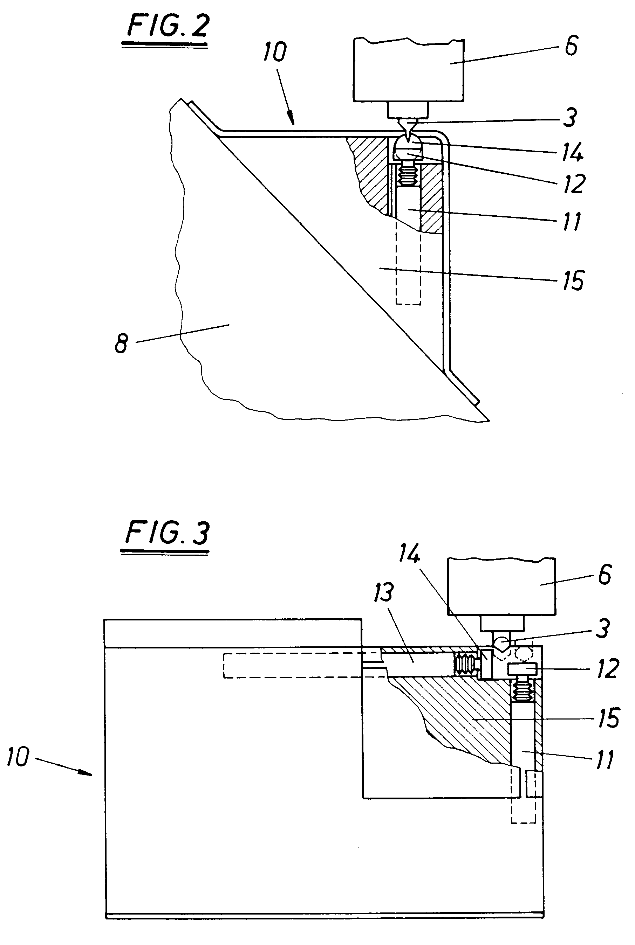

- Fig. 2 und 3: die Justiereinrichtung dieser Schneidmaschine in teilgeschnittener Seiten- und Vorderansicht größeren Maßstabes.

Um Flachmaterial auf kontrollierbare Tiefe schneiden zu können, ist ein Schneidaggregat 1 vorgesehen, das ein auf eine bestimmte Schnittiefe einstellbares, über einen Ultraschallkopf 2 mit Ultraschallfrequenz schwingendes Schneidmesser 3 aufweist. Zur Höheneinstellung des Schneidmessers 3 gibt es einen das Schneidaggregat 1 tragenden Vertikalschlitten 4, der über einen Antrieb 5 in Abhängigkeit von einer nicht weiter dargestellten Steuerungseinrichtung mit gewünschter Genauigkeit verfahrbar ist. Um das Schneidmesser 3 beim Schnitt tangential an der Schnittlinie entlang führen zu können, sitzt das Schneidmesser 3 in einem Messerhalter 6, der um eine Vertikalachse drehbar gelagert ist und mittels eines ebenfalls über die Steuerungseinrichtung ansteuerbaren Antriebes 7 entsprechend dem gewünschten Schnittverlauf drehverstellbar ist. Ein nur angedeuteter, aus Längs- und Querschlitten bestehender Support 8 für das Schneidaggregat 1 erlaubt ein Verfahren des Schneidaggregates 1 über die Arbeitsfläche 9 eines nicht weiter dargestellten Schneidtisches, so daß das Schneidmesser 3, einem beliebigen Schnittverlauf folgend, ein auf der Arbeitsfläche 9 liegendes Flachmaterial schneiden kann, wobei über die Steuerungseinrichtung nicht nur die Bewegung des Schneidaggregates 1 in einer zur Arbeitsfläche 9 parallelen Ebene, sondern auch die Vertikalverstellung des Vertikalschlittens 4 und damit die Höheneinstellung des Schneidmessers 3 und dessen Drehantrieb 7 und damit dessen Winkellage kontrolliert.

Um die Höhenlage des Schneidmessers 3 und auch die Winkellage exakt ansteuern zu können, muß der Steuerungseinrichtung jeweils ein Referenzpunkt für die Höhenlage bzw. Winkellage des Schneidmessers 3 eingegeben werden, wozu eine Justiereinrichtung 10 vorgesehen ist. Diese Justiereinrichtung 10 umfaßt einen vertikal ausgerichteten Weggeber 11 mit einem oberen Meßkopf 12 zum Aufsetzen des Schneidmessers 3 und einen horizontal ausgerichteten Weggeber 13 mit einem Meßkopf 14 zum seitlichen Anlegen des Schneidmessers 3. Die beiden als Induktions-Längenmeßgeräte ausgebildeten Weggeber 11, 13 sind in einem gemeinsamen Gehäuse 15 der Justiereinrichtung 10 untergebracht, wobei der horizontal ausgerichtete Weggeber 13 im Höhenbereich des Meßkopfes 12 des vertikal ausgerichteten Weggebers 11 liegt. Soll nun ein Referenzpunkt für die Höheneinstellung des Schneidmessers der Steuerungseinrichtung eingegeben werden, braucht das Schneidmesser 3 nur über den Weggeber 11 gefahren und mit seiner Spitze auf den Meßkopf 12 abgesenkt zu werden, da die Abweichung der Istlage des Meßkopfes 12 nach dem Aufsetzen des Messers von der Ausgangslage, die gegenüber der Arbeitsfläche 9 einjustiert und vorgegeben ist, ein genaues Maß für die tatsächliche Höhenlage des Schneidmessers 3 ist und dadurch der Steuerungseinrichtung zu jeder Zeit ein exakter Referenzpunkt eingegeben werden kann.

Zur Winkellagenbestimmung des Messers 3 wird das Schneidmesser 3 einfach an den Meßkopf 14 des horizontal ausgerichteten Weggebers 13 angefahren und dann in Drehung versetzt, so daß die Abweichungen der über den Weggeber 13 erfaßten Istlagen von einer entsprechend justierten Ausgangslage in Abhängigkeit von der Querschnittsgeometrie des Messers dessen Winkellage zu bestimmen erlaubt. Die während einer solchen Messerumdrehung der Steuerungseinrichtung eingegeben Meßdaten können daher sofort zur Bestimmung der Winkellage und zum Setzen eines Winkelreferenzpunktes verrechnet werden.

Die Justiereinrichtung 10 läßt sich an beliebiger, für das Schneidmesser 3 zugänglicher Stelle an der Schneidmaschine anordnen, wobei es zweckmäßig ist, diese Justiereinrichtung 10 an einer geeigneten Stelle des Supports 8 zu montieren, so daß diese Justiereinrichtung mit kurzen Anfahrwegen vom Schneidaggregat 1 erreichbar ist und jederzeit ohne große Verzögerung eine Messerjustierung ermöglicht.

## Patentansprüche

1. Schneidmaschine zum Schneiden von Flachmaterial, mit einem eine Arbeitsfläche (9) bildenden Schneidtisch, einem über die Arbeitsfläche (9) verfahrbaren Support (8) und einem auf dem Support (8) aufgebauten, ein Schneidmesser (3) aufweisenden Schneidaggregat (1), das zur Höheneinstellung des Schneidmessers (3) auf eine bestimmte Schnittiefe auf einem Vertikalschlitten (4) des Supports (8) sitzt und zum schnittgerechten Ausrichten des Schneidmessers (3) mit einem um eine Vertikalachse drehbaren Messerhalter (6) ausgestattet ist, wobei die Antriebe (5, 7) von Messerhalter (6), Vertikalschlitten (4) und Support (8) über eine Steuerungseinrichtung entsprechend einem eingebbaren Schnittprogramm ansteuerbar sind, dadurch gekennzeichnet, daß eine Justiereinrichtung (10) für das Schneidmesser (3) mit einem vertikal ausgerichteten Weggeber (11) vorgesehen ist, der die Istlage des mit seiner Spitze auf einem Meßkopf (12) des Weggebers (11) aufgesetzten Schneidmessers (3) bei in eine Justierposition gebrachtem Vertikalschlitten (4) erfaßt und die Abweichung dieser Istlage von einer in ihrer Höhenlage gegenüber der Arbeitsfläche (9) vorjustierten Nullage des Meßkopfes (12) zur Bestimmung eines Referenzpunktes für die Höheneinstellung des Schneidmessers (3) der Steuerungseinrichtung eingibt, wobei der Weggeber (11) vorzugsweise am Support (8) angeordnet ist, und daß die Justiereinrichtung (10) zusätzlich einen horizontal ausgerichteten zweiten Weggeber (13) aufweist, der die während einer Umdrehung des Schneidmessers (3) bei in eine Justierposition gebrachtem Schneidaggregat (1) auftretenden Istlagenänderungen erfaßt und zur Bestimmung der Winkellage des Schneidmessers (3) und zur Festsetzung eines Referenzpunktes für dessen Winkeleinstellung der Steuerungseinrichtung eingibt.

2. Schneidmaschine nach Anspruch 1, dadurch gekennzeichnet, daß beide Weggeber (11, 13) in einem gemeinsamen Gehäuse (15) der Justiereinrichtung (10) angeordnet sind, wobei der horizontal ausgerichtete Weggeber (13) im Höhenbereich der Nullage des Meßkopfes (12) des vertikal ausgerichteten Weggebers (11) liegt.

3. Schneidmaschine nach Anspruch 1 oder 2, dadurch gekennzeichnet, daß als Weggeber (11, 13) ein induktiver Weggeber vorgesehen ist.

## Claims

1. A cutting machine for cutting flat material, comprising a cutting table forming a worktop (9), a support (8) adapted to traverse the worktop (9), and a cutting unit (1) built up on the support (8) and having a cutting knife (3), said cutting unit (1) being mounted on a vertical slide (4) of the support (8) for the purpose of adjusting the height of the cutting knife (3) to a given cutting depth, and being equipped with a knife holder (6) rotatable about a vertical axis for alignment of the cutting knife (3) to give a correct cut, the drives (5, 7) for the knife holder (6), vertical slide (4) and support (8) being controllable in accordance with an inputtable cutting program by means of a control device, characterised in that an adjustment device (10) is provided for the cutting knife (3), with a vertically aligned travel sensor (11) which detects the actual position of the cutting knife (3), the tip of which is placed on a measuring head (12) of the sensor (11), the vertical slide (4) being brought into an adjustment position, and inputs to the control device the deviation of this actual position from a zero position of the measuring head (12), the vertical position of which is preadjustable relatively to the worktop (9), in order to define a reference point for the vertical adjustment of the cutting knife (3), the sensor (11) preferably being disposed on the support (8), and in that the adjustment device (10) additionally comprises a horizontally aligned second travel sensor (13) which detects the actual position variations occurring during one revolution of the cutting knife (3) with the cutting unit (1) brought into an adjusting position, and inputs the same to the control device to define the angular position of the cutting knife (3) and establish a reference point for its angular adjustment.

2. A cutting machine according to claim 1, characterized in that the two travel sensors (11, 13) are disposed in a common housing (15) of the adjustment device (10), the horizontally aligned sensor (13) being disposed in the area of the height of the zero position of the measuring head (12) of the vertically aligned sensor (11).

3. A cutting machine according to claim 1 or 2, characterized in that the travel sensor (11, 13) is an inductive sensor.

## Revendications

1. Machine de coupe, pour découper un matériau plat, avec une table de coupe formant surface de travail (9), un support (8) déplaçable au-dessus de la surface de travail (9), et un groupe de coupe (1), monté sur le support (8), présentant une lame de coupe (3), et reposant sur un chariot vertical (4) du support (8), pour effectuer le réglage en hauteur de la lame de coupe (3), et équipé d'un porte-lame (6) tourillonnant sur un axe vertical, pour orienter la lame de coupe (3) correctement pour la coupe, les entraînements (5, 7) du porte lame (6), du chariot vertical (4) et du support (8) pouvant être commandés par un dispositif de commande, d'une manière correspondant à un programme de coupe ayant été chargé,
caractérisé en ce que le dispositif d'ajustement (10) destiné à la lame de coupe (3) est prévu avec un capteur de déplacement (11) orienté pour opérer verticalement, qui appréhende la position réelle de la lame de coupe (3) placée en une position d'ajustement, sa pointe placée sur une tête de mesure (12) du capteur de déplacement (11), et introduit dans le dispositif de commande l'écart entre cette position réelle et une position zéro de la tête de mesure (12), préajustée quant à sa position en hauteur par rapport à la surface de travail (9), pour déterminer un point de référence concernant le réglage en hauteur de la lame de coupe (3), le capteur de déplacement (11) étant de préférence disposé sur le support (8), et en ce que le dispositif d'ajustement (10) présente en plus un deuxième capteur de déplacement (13), orienté pour opérer horizontalement et qui, pendant une rotation de la lame de coupe (3), lorsque le groupe de coupe (1) est placé dans la position d'ajustement, appréhende les variations de la position réelle et les introduit dans le dispositif de commande pour déterminer la position angulaire de la lame de coupe (3) et déterminer un point de référence concernant le réglage en hauteur.

2. Machine de coupe selon la revendication 1, caractérisé en ce que les deux capteurs de déplacement (11, 13) sont disposés dans un boîtier (15) commun, le capteur de déplacement (13) orienté pour opérer horizontalement étant situé dans la zone de hauteur de la position zéro de la tête de mesure (12) du capteur de déplacement (12) orienté pour opérer verticalement.

3. Machine de coupe selon la revendication 1 ou 2, caractérisé en ce que l'on prévoit un capteur de déplacement inductif comme capteur de déplacement (11, 13).
